(19) Europäisches Patentamt
European Patent Office
Office européen des brevets

(11) EP 4 577 585 B1

(12) # EUROPEAN PATENT SPECIFICATION

(45) Date of publication and mention of the grant of the patent:
**19.11.2025 Bulletin 2025/47**

(21) Application number: **24768105.9**

(22) Date of filing: **10.09.2024**

(51) International Patent Classification (IPC):
***C08F 220/18*** *(2006.01)* ***C08F 230/02*** *(2006.01)*
***C09D 143/02*** *(2006.01)*

(52) Cooperative Patent Classification (CPC):
(C-Sets available)
**C08F 220/1804; C08F 230/02; C09D 143/02**
(Cont.)

(86) International application number:
**PCT/EP2024/075184**

(87) International publication number:
**WO 2025/056498 (20.03.2025 Gazette 2025/12)**

(54) **PHOSPHATE-CONTAINING EMULSION-BASED BINDER**

PHOSPHATHALTIGES BINDEMITTEL AUF EMULSIONSBASIS

LIANT À BASE D’ÉMULSION CONTENANT DU PHOSPHATE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.09.2023 PCT/CN2023/117969**

(43) Date of publication of application:
**02.07.2025 Bulletin 2025/27**

(73) Proprietor: **Evonik Operations GmbH**
**45128 Essen (DE)**

(72) Inventors:
- **GAO, Bo**
  **Shanghai, 201199 (CN)**
- **EBERT, Martina**
  **64807 Dieburg (DE)**
- **BRAUM, Manfred**
  **55126 Mainz (DE)**
- **CLAMER, Elisabeth**
  **64289 Darmstadt (DE)**
- **KÖMMELT, Sabine**
  **64285 Darmstadt (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**WO-A1-2022/073224**
**CN-A- 109 232 785**
**US-A1- 2015 112 016**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1804, C08F 220/14, C08F 230/02**

## Description

### Technical Field

The present invention relates to a monomer composition comprising 5 wt.% to 15 wt.% of a phosphorus-containing monomer and a process for preparing a polymer dispersion from said monomer composition.

Unsaturated (meth)acrylate -based phosphate esters such as 2-hydroxyethyl-methacrylate-phosphate (HEMA-P) are well-known adhesion promoters in applications like adhesives or coating resins providing improved adhesion to polar substrates. Additionally, the incorporation of (meth)acrylate-based phosphate esters can improve the corrosion protection of emulsion-based coating formulations due to the improved adhesion. Furthermore, phosphor-based compounds are well-known to improve flame-retardant properties. The incorporation of unsaturated (meth)acrylate-based phosphate esters into polymeric resins leads to the formation of flame-retardant materials.

Flame retardant properties are of high interest in the coatings industry, especially for materials which are flammable, like e.g. wood coatings. In the latter application, especially halogen-free coatings are even more preferred.

### State of the art

WO 2022/089879 relates to a reactive diluent system for composite resins comprising (a) a reactive diluent composition comprising an organic (meth)acrylate-based phosphorus compound and (b) an accelerator system.

Composite resins are reactive resins. They are cured in the final application. They consist of a resin (e.g. vinyl ester or unsaturated polyester resin) that is dissolved in a reactive diluent. The standard reactive diluent for vinyl esters and unsaturated polyester resins is styrene, but also derivates of styrene (e.g. tert-butyl styrene) or vinyl toluene can be used. New reactive diluents are (meth)acrylates. HEMA-P can be used as co-reactive diluent in composite resins to enhance the flame-retardant properties.

In contrast thereto, in the present patent application, HEMA-P is incorporated into an aqueous dispersion by emulsion polymerization to be used as binder. During the emulsion polymerization, HEMA-P is copolymerized with several other unsaturated monomers by a radical polymerization. After the emulsion polymerization, no polymerizable HEMA-P is left. The binder consists of a dispersion of an acrylic copolymer (small particles) in water. The dispersion is stabilized by surfactants used already during the emulsion polymerization. The acrylic binder can then by formulated into a water-based paint by adding pigments, fillers, preservatives, flame-retardant additives (like ammonium polyphosphate) or any other common additive.

CN109232785 discloses a flame retardant composition comprising methacrylate monomers, a phosphorous containing monomer in amount of 5-25 wt% based on total monomers amount, ammonia, water, a surfactant, an initiator and a buffer.

US 6,710,161 B2 relates to a polymer composition containing copolymer particles bearing phosphorous acid groups and a process for preparing the polymer composition. The description discloses that the copolymer particles may contain the phosphorous acid monomer at a level in the range of 0.1 to 20 wt.%, preferably from 0.5 to 10 wt.%, and more preferably from 1 to 6 wt.%, based on the weight of the copolymer particles. Examples 2 and 3 disclose the preparation of polymer compositions comprising 3.9 wt.% of phosphoethyl methacrylate, whereby the polymerization of the phosphorous acid monomer takes place in an aqueous reaction medium having a pH of less than 2. That means that the incorporation of phosphoethyl methacrylate was only successful under strong acidic conditions. Aqueous ammonia was only added after the polymerization to raise the pH. The results showed that the preparation of the polymer composition using a low pH process resulted in increases in solvent resistance.

Stability data of the resulted polymer compositions with a phosphoethyl methacrylate content of more than 3.9 wt.% are not reported.

EP 2 945 991 B1 is directed to a coating composition comprising an aqueous dispersion of polymer particles, wherein the polymer particles comprise generically from 0.1 to 6% by weight present structural units of a phosphorus acid monomer or salt thereof (see [0007]).

A preferred concentration of structural units of the phosphorus acid monomer is from 0.2 to 4 wt.%, more preferably from 0.5 to 2 wt.% (see [0013]). Working Examples 1 and 2 both comprise 2 wt.% of phosphoethyl methacrylate (PEM), resulting in an active content of only 1.2 wt.%.

The aqueous dispersion of polymer particles can be prepared by forming an at least partially neutralized solution of the phosphorus acid monomer, then contacting the solution with vinyl acetate and optionally the sulfur acid monomer, or salt thereof, and/or the acrylate monomer under emulsion polymerization conditions (see [0017]). As suitable neutralizing agents are disclosed ammonia, KOH, NaOH, ethanol amine, and aminomethyl propanol (see [0017]). The polymer particles contain major amounts of vinyl acetate and are substantially free of methyl methacrylate (see [0019]).

Stability data of the resulted polymer compositions with a phosphoethyl methacrylate content of more than 1.2 wt.% are not reported.

State of the art fails to disclose polymer compositions comprising more than 5 wt.% of P-containing monomers, especially together with methyl methacrylate and vinyl acetate.

For the application as flame retardant, a higher P-content is beneficial, but polymer compositions comprising more than 5 wt.% of P-containing monomers show less favorable storage stability.

During emulsion polymerization of phosphate-containing monomers like HEMA-P, coagulation occurs when using more than 5 wt.% of phosphate-containing monomers. As a result, no stable products with a HEMA-P content of more than 5 wt.% can be prepared.

## Summary **of the invention**

It was therefore an object of the present invention to provide polymer dispersions comprising 5% by weight to 15% by weight of a phosphorous containing monomer with high stability and improved flame-retardant performance.

It was surprisingly found that polymer compositions comprising 5 wt.% to 15 wt.% of a phosphorous-containing monomer can be prepared if the pre-emulsion is neutralized by addition of a base, especially by using 2-amino-2-methyl-1-propanol. Such polymer compositions are stable for at least one month at 60°C. Especially the use of 2-amino-2-methyl-1-propanole also prevents coagulation during polymerization.

## Detailed description of the invention

A first object of the present invention is directed to a monomer composition, comprising:

(a) 5 wt.% to 15 wt.% of a phosphorus-containing monomer;
(b) 70 wt.% to 95 wt.% of straight-chained or branched C1-18 alkyl (meth)acrylates; and
(c) 0 wt.% to 15 wt.% of one or more further ethylenically unsaturated comonomers different than monomers (a) and (b); and
(d) a base selected from the group consisting of ammonia and 2-amino-2-methyl-1-propanol being present in the composition in a molar ratio of (a) to (d) = 1:1.1 to 1:1.2, preferably 1:1.1.

The content of each component (a), (b) and (c) is based on the total weight of the monomer composition. In a particular embodiment, the proportions of components (a), (b) and (c) add up to 100% by weight.

The content of component (d) is dependent on the content of component (a). The molar ratio of (a) to (d) is 1:1.1 to 1:1.2, preferably 1:1.1.

The phosphorous-containing monomer (a) for use in accordance with the invention is selected from the general formula (I)

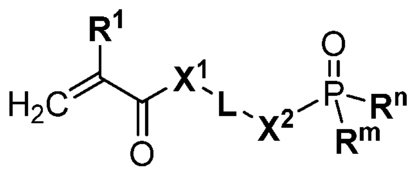

(I)

wherein

$R^1$ denotes H or methyl,

$R^m$ denotes $O^-$ or OH,

R" denotes $O^-$, OH, **Z,** $X^2$-P(=O)$R^{n+1}R^{m+1}$,

**n,** m independently denotes an integer of 2-15,

$X^1$, $X^2$ independently denote O, $CH_2$, S, NH,

Z = 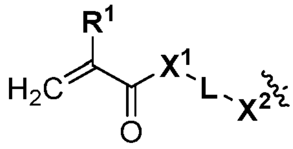

and

L denotes a hydrocarbon linker optionally comprising one or more heteroatoms.

The linker moiety connects the phosphorus unit with the ethylenically unsaturated, polymerizable monomer unit.
As used in the context of the present invention, the term "hydrocarbon linker" includes linker being linear and/or branched aliphatic (e.g. alkyl or alkenyl), alicyclic (e.g. cycloalkyl, cycloalkenyl), and aromatic with aromatic, aliphatic, alicyclic-substituted aromatic substituents, as well as cyclic substituents wherein the ring is completed through another portion of the molecule (e.g. two substituents forming one ring together).
The term "hydrocarbon linker" includes a linker with substituted hydrocarbon substituents, that is, substituents containing non-hydrocarbon groups which do not alter the predominantly hydrocarbon nature of the linker (e.g. chloro, fluoro, bromo, iodo, hydroxy, alkoxy, mercapto, alkylmercapto, alkylhydroxy, nitro, amino, nitroso, sulfoxy.
The term "hydrocarbon linker" also includes a linker with hetero substituents, that is, substituents which, while having a predominantly hydrocarbon character, contain other than carbon in a ring or chain otherwise composed of carbon atoms. Also included are ethylene oxide (EO) and propylene oxide (PO) linkers. Heteroatoms include sulfur, oxygen, nitrogen, and encompass substituents as pyridyl, furyl, imidazolyl and other heterocycles.
The hydrocarbon linker may be a C0-60 hydrocarbon linking group having oxygen and/or nitrogen and/or sulfur atoms substituted for carbon atoms.
The linker may for instance be $X^1(CH_2CH_2O)_x$-P ($X^2$ = O in this case) with x = 1-20.
In one embodiment of the present invention, the phosphorous-containing monomer (a) is selected from the general formula (Ia)

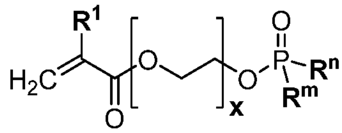

wherein

$R^1$ denote H or methyl,

**R"**, $R^m$ independently denote $O^-$, OH, **Z**, O-P(=O)$R^{n+1}R^{m+1}$,

**n**, m independently denote an integer of 2-15,

x denotes an integer of 1-20,

Z = 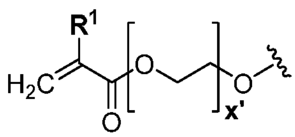

and

x' denotes an integer of 1-20, optionally in the presence of $H_3PO_4$, $H_4P_2O_7$, their salts as well as acyclic/cyclic (poly) phosphates and their salts, and methyl (meth)acrylate.

The polyphosphate moiety may contain mono-, di-, tri- or higher phosphate, or a mono- and/or diphosphonate.
The organic phosphate-containing monomer is preferably a 2-hydroxyalkyl (meth)acrylate phosphate, more preferably 2-hydroxyethyl methacrylate phosphate (HEMA-P).
The phosphate-containing monomer may further comprise a reactive solvent, such as an organic solvent.

As another example, the phosphate-containing monomer may contain 70 wt.% of phosphate components and 30 wt.% of a reactive solvent like methyl methacrylate.

Often, commercially available precursor molecules are mixtures, such as, for example, Sipomer® PAM-4000 or PAM-100 or PAM-200 (from Solvay) or VISIOMER® HEMA-P 70M / 100 (from Evonik).

Such mixtures are contemplated herein, as well as precursor monomer units that are pure. HEMA (poly) phosphate (e.g. PAM-4000 from Solvay) can be made directly from HEMA and P2O5 or (poly)phosphoric acid. Alternatively, other monomers such as hydroxypropyl (meth)acrylate or 4-hydroxybutyl (meth)acrylate could be used in place of HEMA. Other examples include polyethylene glycol (meth)acrylate (poly)phosphate ester (PAM-100 from Solvay) and polypropylene glycol (meth)acrylate (poly)phosphate ester (PAM-200 from Solvay).

The base (d) is preferably 2-amino-2-methyl-1-propanol.

The monomers (b) can be selected from the group consisting of straight-chained or branched C1-18 alkyl (meth) acrylates, preferably straight-chained or branched C1-8 alkyl (meth)acrylates, more preferably straight-chained or branched C1-4 alkyl (meth)acrylates.

[C1-18 alkyl (meth)acrylates]

The C1-18 alkyl (meth)acrylates for use in accordance with the present invention are esters of (meth)acrylic acid and straight chain or branched alcohols having 1 to 18 carbon atoms. The term "C1-18 alkyl methacrylates" encompasses individual (meth)acrylic esters with an alcohol of a particular length, and likewise mixtures of (meth)acrylic esters with alcohols of different lengths.

Suitable C1-18 alkyl (meth)acrylates include, for example, methyl (meth)acrylate, ethyl (meth)acrylate, n-propyl (meth)acrylate, isopropyl (meth)acrylate, n-butyl (meth)acrylate, tert-butyl (meth)acrylate and pentyl (meth)acrylate, hexyl (meth)acrylate, 2-ethylhexyl (meth)acrylate, heptyl (meth)acrylate, 2-tert-butylheptyl (meth)acrylate, octyl (meth) acrylate, 3-isopropylheptyl (meth)acrylate, nonyl (meth)acrylate, decyl (meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate, pentadecyl (meth)acrylate, hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth) acrylate, eicosyl (meth)acrylate, cetyleicosyl (meth)acrylate, stearyleicosyl (meth)acrylate, docosyl (meth)acrylate, and eicosyltetratriacontyl (meth)acrylate.

[C1-8 alkyl (meth)acrylates]

The C1-8 alkyl (meth)acrylates for use in accordance with the present invention are esters of (meth)acrylic acid and straight chain or branched alcohols having 1 to 8 carbon atoms. The term "C1-8 alkyl methacrylates" encompasses individual (meth)acrylic esters with an alcohol of a particular length, and likewise mixtures of (meth)acrylic esters with alcohols of different lengths. Suitable C1-8 alkyl (meth)acrylates include, for example, methyl (meth)acrylate, ethyl (meth) acrylate, n-propyl (meth)acrylate, isopropyl (meth)acrylate, n-butyl (meth)acrylate, tert-butyl (meth)acrylate and pentyl (meth)acrylate, hexyl (meth)acrylate, 2-ethylhexyl (meth)acrylate, heptyl (meth)acrylate, 2and octyl (meth)acrylate.

[C1-4 alkyl (meth)acrylates]

The C1-4 alkyl (meth)acrylates for use in accordance with the present invention are esters of (meth)acrylic acid and straight chain or branched alcohols having 1 to 4 carbon atoms. The term "C1-4 alkyl methacrylates" encompasses individual (meth)acrylic esters with an alcohol of a particular length, and likewise mixtures of (meth)acrylic esters with alcohols of different lengths. Suitable C1-4 alkyl (meth)acrylates include, for example, methyl (meth)acrylate, ethyl (meth) acrylate, n-propyl (meth)acrylate, isopropyl (meth)acrylate, n-butyl (meth)acrylate, and tert-butyl (meth)acrylate.

The one or more further ethylenically unsaturated comonomers (c), which are different than monomers (a) and (b), can be selected from the group consisting of cycloalkyl (meth)acrylates, (meth)acrylates derived from unsaturated alcohols, heterocyclic (meth)acrylates, nitriles of (meth)acrylic acid and other nitrogenous methacrylates, (meth)acrylamides, aryl (meth)acrylates, (meth)acrylates which have two or more (meth)acryloyl groups, (meth)acrylates having three or more double bonds, ethylenically unsaturated carbocylic acid(s), hydroxyalkyl (meth)acrylates, styrene monomers and vinyl esters.

[cycloalkyl (meth)acrylates]

The cycloalkyl (meth)acrylates for use in accordance with the present invention are esters of (meth)acrylic acid and cyclic alcohols. Suitable cycloalkyl (meth)acrylates include, for example, cyclopentyl (meth)acrylate, cyclohexyl

(meth)acrylate, 3-vinylcyclohexyl (meth)acrylate, isobornyl (meth)acrylate, cycloalkyl (meth)acrylates, such as 2,4,5-tri-tert-butyl-3-vinylcyclohexyl (meth)acrylate, and 2,3,4,5-tetra-tert-butylcyclohexyl (meth)acrylate.

The (meth)acrylates which are derived from unsaturated alcohols for use in accordance with the present invention include, for example, 2-propynyl (meth)acrylate, allyl (meth)acrylate and vinyl (meth)acrylate.

The heterocyclic (meth)acrylates for use in accordance with the present invention include, for example, 2-(1-imidazolyl)ethyl (meth)acrylate, 2-(4-morpholinyl)ethyl (meth)acrylate and 1-(2-methacryloyloxyethyl)-2-pyrrolidone.

The nitriles of (meth)acrylic acid and other nitrogenous methacrylates for use in accordance with the present invention include, for example, N-(methacryloyloxyethyl)diisobutyl ketimine, N-(methacryloyloxyethyl)dihexadecyl ketimine, methacryloylamidoacetonitrile, 2-methacryloyloxyethylmethyl cyanamide, and cyanomethyl methacrylate.

The (meth)acrylamides for use in accordance with the present invention include, for example, (meth)acrylamide and N-isopropyl (meth)acrylamide.

The aryl (meth)acrylates for use in accordance with the present invention include, for example, benzyl (meth) acrylate and phenyl (meth)acrylate, wherein the aryl radicals can in each case be unsubstituted or up to quadruply substituted.

The (meth)acrylates which have two or more (meth)acryloyl groups for use in accordance with the present invention include, for example, glycol di(meth)acrylates, such as ethylene glycol di(meth)acrylate, diethylene glycol di(meth)acrylate, triethylene glycol di(meth)acrylate, tetra- and polyethylene glycol di(meth)acrylate, 1,3-butanediol (meth)acrylate, 1,4-butanediol (meth)acrylate, 1,6-hexanediol di(meth)acrylate, glycerol di(meth)acrylate; dimethacrylates of ethoxylated bisphenol A.

The (meth)acrylates having three or more double bonds for use in accordance with the present invention include, for example, glycerol tri(meth)acrylate, trimethylolpropane tri(meth)acrylate, pentaerythritol tetra(meth)acrylate and dipentaerythritol penta(meth)acrylate.

The ethylenically unsaturated carboxylic acid(s) for use in accordance with the invention include acrylic acid and methacrylic acid.

The hydroxyalkyl (meth)acrylates for use in accordance with the present invention include, for example, 2-hydroxypropyl (meth)acrylate, 3-hydroxypropyl(meth)acrylate, 3,4-dihydroxybutyl(meth)acrylate and 2-hydroxyethyl (methacrylate).

The styrene monomers for use in accordance with the present invention include, for example, styrene, substituted styrenes having an alkyl substituent in the side chain, for example $\alpha$-methylstyrene and $\alpha$-ethylstyrene, substituted styrenes having an alkyl substituent on the ring, such as vinyltoluene and p-methylstyrene.

Suitable vinyl esters for use in accordance with the present invention include, for example, vinyl acetate.

Suitable self cross-linking monomers like diacetone-acrylamide (DAAM) or acetoacetoxyethyl methacrylate (AAEMA) can also be used as comonomers in accordance with the present invention. Crosslinking or curing occurs in the presence of diamines and dihydrazides at ambient temperatures during the drying process of the coating.

The term "(meth)acrylate" refers to both, esters of acrylic acid and esters of methacrylic acid.

In accordance with the present invention, particular preference is given to using monomer mixtures which comprise methacrylates and acrylates. Thus, use may especially be made of mixtures of methyl methacrylate and acrylates having 2 to 4 carbon atoms, such as ethyl acrylate and butyl acrylate.

A further object of the present invention is directed to a monomer composition, comprising:

(a) 5 wt.% to 15 wt.%, preferably 10 wt.% to 15 wt.%, of a phosphorous-containing monomer according to formula (I);
(b) 75 wt.% to 95 wt.%, preferably 80 wt.% to 95 wt.%, of straight-chained or branched C1-18 alkyl (meth)acrylates;
(c) 0 wt.% to 10 wt.% of one or more further comonomers; and
(d) 2-amino-2-methyl-1-propanol being present in the composition in a molar ratio of (a) to (d) = 1:1.1 to 1:1.2, preferably 1:1.1.

The content of each component (a), (b) and (c) is based on the total weight of the monomer composition. In a particular embodiment, the proportions of components (a), (b) and (c) add up to 100% by weight.

The content of component (d) is dependent on the content of component (a). The molar ratio of (a) to (d) is 1:1.1 to 1:1.2, preferably 1:1.1.

A further object of the present invention is directed to a monomer composition, consisting of:

(a) 5 wt.% to 15 wt.% of a phosphorous containing monomer;
(b1) 40 wt.% to 50 wt.% of methyl methacrylate;
(b2) 40 wt.% to 50 wt.% of n-butyl acrylate; and
(d) 2-amino-2-methyl-1-propanol being present in the composition in a molar ratio of (a) to (d) = 1:1.1 to 1:1.2, preferably 1:1.1.

The content of each component (a), (b1) and (b2) is based on the total weight of the monomer composition. In a particular embodiment, the proportions of components (a), (b1) and (b2) add up to 100% by weight.

The content of component (d) is dependent on the content of component (a). The molar ratio of (a) to (d) is 1:1.1 to 1:1.2, preferably 1:1.1.

Monomer mixtures used according to the invention having a high proportion of (meth)acrylate monomer according to formula (I) generally lead to polymers or coating compositions which make it possible to obtain particularly good adhesion and high phosphorous contents.

The glass transition temperature of the polymers is situated preferably in the range of -30°C to 70°C, more preferably in the range of -20°C to 40°C and more preferably in the range of 0 to 25°C.

In general, methacrylate monomers can provide good mechanical property, color retention and excellent outdoor weathering ability to the coating resins. In the range of the methacrylate derivatives, HEMA-phosphate monomers are well-known as good candidates to provide extraordinary adhesion and excellent anti-corrosion property on the metal substrates for the coating resins.

Meanwhile, because of the phosphate functional groups in monomer structure, HEMA-phosphate monomers can endow resins or coatings with fireproofing performance as well. Nowadays, more and more attentions are attracted to flame retardancy in many applications, such as construction coatings, wood coatings, composites etc., since a large multitude of lives and properties sacrifices were witnessed during last many years. According to lots of reports and research, the content of phosphor in the resins should be necessarily above at least 0.5 wt%, preferably at least 1 wt.% and most preferably at least 1.5 wt.% if an excellent flame-retardant performance is expected. In terms of HEMA-phosphate containing emulsion technology, the dosage of HEMA-phosphate in an ideal emulsion polymer for flame resistance need to be as high as 15 wt.%.

A further object of the present invention is directed to a process for preparing a polymer dispersion, comprising the steps of:

(i) charging a reactor with water, a buffer substance and at least one surfactant;
(ii) preparing a monomer composition, comprising:

    (a) 5 wt.% to 15 wt.% of a phosphorous-containing monomer;
    (b) 70 wt.% to 95 wt.% of straight-chained or branched C1-18 alkyl (meth)acrylates; and
    (c) 0 wt.% to 15 wt.% of one or more further ethylenically unsaturated comonomers different than monomers (b) and (c); based on the total weight of the monomer composition; and
    (d) a base selected from the group consisting of ammonia and 2-amino-2-methyl-1-propanol being present in the composition in a molar ratio of (a) to (d) = 1:1.1 to 1:1.2, preferably 1:1.1;

(iii) preparing a pre-emulsion, comprising:

    (a) the monomer composition prepared in step (ii); and
    (b) water; and
    (c) at least one surfactant;

(iv) preparing an aqueous initiator solution 1 comprising 0.1 wt.% to 0.5 wt.% of an initiator 1, based on the total amount of monomer composition;
(v) adding 5% to 15% of the initiator solution 1 prepared in step (iv) to the reactor;
(vi) adding 5% to 15% of the pre-emulsion prepared in step (iii) to the reactor to receive a seed-emulsion;
(vii) feeding the residual 85% to 95% of the pre-emulsion prepared in step (iii) to the reactor;
(viii) feeding 85% to 95% of the initiator solution 1 prepared in step (iv) to the reactor;
(ix) preparing an aqueous initiator solution 2 comprising 0.1 wt.% to 0.5 wt.% of an initiator 2 and 0.05 wt.% to 0.3 wt.% of a reducing agent; and
(x) feeding the initiator solution 2 prepared in step (ix) to the reactor to receive the targeted polymer dispersion.

The buffer or buffer system for pH regulation mentioned in step (i) can be selected from a buffer substance, for example sodium tetraborate, sodium carbonate or acetate buffer, preferably sodium carbonate.

The base (d) used for the pre-neutralization of the monomer composition in step (ii) can be selected from the group consisting of sodium hydroxide solution, ammonia solution or 2-amio-2-methyl-1-propanol (AMP). Preferred for the pre-neutralization of the monomer composition in accordance with the present invention is the use of 2-amio-2-methyl-1-propanol (AMP).

The surfactant used in step (i) is preferably an emulsifier and/or protective colloid, preferably an emulsifier. The total amount of emulsifier is preferably from 0.1 wt.% to 15 wt.%, more preferably 1 wt.% to 10 wt.%, and more preferably 3

wt.% to 7 wt.%, based on the total weight of the monomers used.

According to a further aspect of the present invention, a portion of the emulsifiers can be added during the polymerization as part of the pre-emulsion prepared in step (iii).

Particularly suitable emulsifiers are anionic or nonionic emulsifiers or mixtures thereof, especially:

- alkyl sulfates, preferably those having 8 to 18 carbon atoms in the alkyl radical, alkyl and alkylaryl ether sulfates having 8 to 18 carbon atoms in the alkyl radical and 1 to 50 ethylene oxide units;
- sulfonates, preferably alkylsulfonates having 8 to 18 carbon atoms in the alkyl radical, alkylarylsulfonates having 8 to 18 carbon atoms in the alkyl radical, esters of sulfosuccinic acid with monohydric alcohols or alkylphenols having 4 to 15 carbon atoms in the alkyl radical; these alcohols or alkylphenols may also optionally be ethoxylated with 1 to 40 ethylene oxide units;
- phosphoric partial esters and the alkali metal and ammonium salts thereof, preferably alkyl and alkylaryl phosphates having 8 to 20 carbon atoms in the alkyl or alkylaryl radical and 1 to 5 ethylene oxide units;
- alkyl polyglycol ethers, preferably having 8 to 20 carbon atoms in the alkyl radical and 8 to 40 ethylene oxide units;
- alkylaryl polyglycol ethers, preferably having 8 to 20 carbon atoms in the alkyl or alkylaryl radical and 8 to 40 ethylene oxide units; or
- ethylene oxide/propylene oxide copolymers, preferably block copolymers, favourably having 8 to 40 ethylene oxide and/or propylene oxide units.

The particularly preferred anionic emulsifiers include especially fatty alcohol ether sulfates, fatty alcohol ether suphosuccinates, diisooctylsulfosuccinate, lauryl sulfate, C15 paraffin sulfonate, with these compounds generally being able to be used as alkali metal salt, especially as sodium salt. These compounds are commercially available especially under the trade names Disponil® FES 32 (BASF), Aerosol® OT 75 (Solvay), Texapon® K1296 (BASF), SR 1025 (Adeka), REWOPOL® SB FA 50 (Evonik) or A6828 (Onist).

Expediently, nonionic emulsifiers are *inter alia* tert-octylphenol ethoxylate with 30 ethylene oxide units and fatty alcohol polyethylene glycol ethers which preferably have 8 to 20 carbon atoms in the alkyl radical and 8 to 40 ethylene oxide units. These emulsifiers are commercially available under the trade names Triton® X 305 (Dow), Tergitol® 15-S-7 (Dow), Marlipal® 1618/25 (Sasol Germany) and Marlipal® O 13/400 (Sasol Germany) or Emulsogen LCN 287 (alkyl polyethylene glycol ether with 28 mole ethylene oxide from Clariant).

The phosphorous-containing monomer (a) and the comonomers (b) and (c) added in step (ii) are defined as hereinbefore described.

Further monomer compositions as used in accordance with the disclosed process are defined as hereinbefore described.

The preparation of the dispersions can be carried out batchwise in a so-called batch process, in a feed process (so-called semi-batch process or fed-batch process), or via a continuous process. Preferably, the preparation is carried out via a batch or semi-batch process.

Methods of emulsion polymerization are *inter alia* described in Ullmann's Encyclopedia of Industrial Chemistry, Fifth Edition. In general, for this purpose an aqueous phase is prepared which, as well as water, can comprise customary additives, especially emulsifiers and protective colloids for the stabilization of the emulsion.

Monomers are subsequently added to this aqueous phase and polymerized in the aqueous phase.

The polymerization is preferably started by heating the batch to the polymerization temperature and metering in the initiator, preferably in aqueous solution. The metered feeds of initiator and the monomer- emulsifier mixture, so called pre-emulsion, may be carried out separately or as a mixture. In the case of the metred addition of the pre-emulsion, the approach taken is to premix emulsifier and monomer separately.

An important aspect of the present invention is that the monomer mixture is mixed with a neutralization agent (ammonia or AMP) before the addition of the emulsifier. After combining the monomer mixture with the emulsifier, the mixture is emulsified by known means, for example high shear mixing.

Preferably, the remainders of the initiator and of the pre-emulsion which have not been included in the initial charge are metered separately from on another after the start of the polymerization. With preference it is possible to commence the metered feed 5 to 35 minutes after the start of the polymerization.

The emulsion polymerization may for example be implemented as mini- or microemulsion, which are described in more detail in Chemistry and Technology of Emulsion Polymerisation, A.M. van Herk (editor), Blackwell Publishing, Oxford 2005 and J. O'Donnell, E.W. Kaler, Macromolecular Rapid Communications 2007, 28(14), 1445-1454. A miniemulsion is usually characterized by the use of co-stabilizers or swelling agents, with long-chain alkanes or alkanols often being used. The droplet size in miniemulsions is preferably in the range from 0.05 μm to 20 μm. The droplet size in microemulsions is preferably in the range of below 1 μm, as a result of which particles smaller than a size of 50 nm can be obtained. In microemulsions, additional surfactants are often used, for example hexanol or similar compounds.

The dispersing of the monomer-containing phase in the aqueous phase may take place using known means.

These include especially mechanical methods and the use of ultrasound.

The emulsion polymerization is carried out preferably at a temperature in the range from 0°C to 120°C, particularly preferably in the range from 30°C to 100°C. In this case, polymerization temperatures in the range from greater than 60°C to less than 90°C, expediently in the range from greater than 70°C to less than 85°C, preferably in the range from greater than 75°C to less than 85°C, have proved to be particularly favourable.

The initiation of the polymerization is effected with the initiators that are commonly used for emulsion polymerization. Suitable organic initiators are, for example, hydroperoxides such as tert-butyl hydroperoxide (TBHP) or cumene hydroperoxide. Suitable inorganic initiators are hydrogen peroxide and the alkali metal and ammonium salts of peroxodisulfuric acid, especially ammonium, sodium and potassium peroxodisulfate. Suitable redox initiator systems are for example combinations of tertiary amines with peroxides or sodium disulfite and alkali metal and ammonium salts of peroxodisulfuric acid, especially sodium and potassium peroxodisulfate. Further details may be found in the specialist literature, especially H. Rauch-Puntigam, Th. Völker, "Acryl- und Methacrylverbindungen" [acrylic and methacrylic compounds], Springer, Heidelberg, 1967 or Kirk-Othmer, Encyclopedia of Chemical Technology, vol. 1, pages 386ff, J. Wiley, New York, 1978. In the context of the present invention, the use of organic and/or inorganic initiators is particularly preferred.

Said initiators can be used individually or as a mixture. They are preferably used in an amount of 0.05 to 3.0 wt.% based on the total weight of the monomers in the particular stage. It is also possible to preferably carry out the polymerization with a mix of different polymerization initiators with different half-life values, in order to keep the supply of radicals constant over the course of the polymerization and also at different polymerization temperatures.

A further aspect of the present invention relates to an aqueous polymer dispersion, comprising:

(A) 20 wt.% to 80 wt.%, preferably 30 wt.% to 60 wt.%, more preferably 30 wt.% to 40 wt.%, of a polymer, comprising:

(a) 5 wt.% to 15 wt.% of a phosphorous containing monomer;
(b1) 40 wt.% to 50 wt.% of methyl methacrylate; and
(b2) 40 wt.% to 50 wt.% of n-butyl acrylate;
based on the total weight of the monomer composition; and
(d) 2-amino-2-methyl-1-propanol being present in the composition in a molar ratio of (a) to (d) = 1:1.1 to 1:1.2, preferably 1:1.1; and

(B) 20 wt.% to 80 wt.%, preferably 40 wt.% to 70 wt.%, more preferably 60 wt.% to 70 wt.%, of water.

A further aspect of the present invention relates to an aqueous polymer dispersion, comprising:

(A) 20 wt.% to 80 wt.%, preferably 30 wt.% to 60 wt.%, more preferably 30 wt.% to 40 wt.%, of a polymer, comprising:

(a) 5 wt.% to 15 wt.% of a phosphorous containing monomer;
(b1) 40 wt.% to 50 wt.% of methyl methacrylate;
(b2) 40 wt.% to 50 wt.% of n-butyl acrylate; and
(d) 2-amino-2-methyl-1-propanol being present in the composition in a molar ratio of (a) to (d) = 1:1.1 to 1:1.2, preferably 1:1.1; and

(B) 20 wt.% to 80 wt.%, preferably 40 wt.% to 70 wt.%, more preferably 60 wt.% to 70 wt.%, of water.

The content of each component (A) and (B) is based on the total weight of the aqueous polymer dispersion. In a particular embodiment, the proportions of components (A) and (B) add up to 100% by weight.

The content of each component (a), (b1) and (b2) is based on the total weight of the polymer. In a particular embodiment, the proportions of components (a), (b1) and (b2) add up to 100% by weight.

The content of component (d) is dependent on the content of component (a). The molar ratio of (a) to (d) is 1:1.1 to 1:1.2, preferably 1:1.1.

The aqueous polymer dispersions of the present invention can especially be used as coating compositions or as additives. This includes, especially, paints, impregnating agents, adhesives and/or primers. The aqueous dispersions can particularly preferably serve for the preparation of paints or impregnating agents for applications on wood and/or metal.

A further aspect of the present invention relates to a coating which is obtainable by applying the inventive aqueous dispersion to an article to be coated and subsequently drying and/or curing it.

Crosslinking reactions may occur with further components of the aqueous dispersions, and so the inventive coating comprises a crosslinked copolymer. The type of the crosslinking reactions depends on the composition of the aqueous dispersion.

Drying occurs by evaporating of the solvent. During drying, the polymer particles of the emulsion coalesce with one another to form a continuous film. This film formation only occurs if the MFFT (Minimum Film Forming Temperature) of the polymer is below the operating temperature.

The MFFT can be lowered by using a molecular weight regulator, also known as chain transfer agent. These chain transfer agents include thiol containing components, for example 2-mercaptoehtanol, 3-mercaptoacetic acid, 3-mercaptopropionic acids.

The particle radius of the emulsion polymer may vary over a wide range. Preferably, the emulsion polymer may have a particle radius in the range of 10 nm to 500 nm, preferably 25 nm to 250 nm, more preferably 50 nm to 200 nm. The radius of the particles can be determined by means of PCS (Photon Correlation Spectroscopy), the data given relating to the r50 value (50% of the particles are smaller, 50% are larger) or the d50 value, the corresponding diameter of the particle. This can be done using, for example, a Beckman Coulter Delsa Nano Particle Analyzer.

The coatings obtained from the inventive coating compositions exhibit good mechanical strength.

The pendulum hardness is preferably at least 10 seconds, preferably at least 15 seconds, measured to DIN ISO 1522.

The inventive dispersions may also comprise further constituents as well as the emulsions polymers.

The present invention is intended to be described in more detail below using the examples and comparative examples, without this giving rise to any restriction.

Experimental Part

*Abbreviations*

| | |
|---|---|
| AMP | 2-amino-2-methyl-1-propanol |
| APS | ammonium persulfate |
| BA | butyl acrylate |
| demin | demineralized |
| FF6M | Bruggolite® FF6M, sulfur-based formaldehyde free reducing agent (commercially available from Brüggemann) |
| HEMA-P 100 | VISIOMER® HEMA-P 100 (commercially available from Evonik Industries) |
| MIBK | methylisobutylketone |
| MMA | methyl methacrylate |
| TBHP | tert-butylhydroperoxide (70%) |

*Examples*

The following Table 1 lists the chemicals used to prepare inventive examples and comparative examples, their function and origins.

Table 1: used chemicals

| Chemicals | Function | Supplier |
|---|---|---|
| deionized (DI) water | Solvent | - |
| sodium carbonate | Buffer | Riedel de Haen |
| Rewopol® SB FA50 | Emulsifier | Evonik |
| Emulsogen® LCN 287 | Emulsifier | Clariant |
| A-6828 | Emulsifier | Onist |
| potassium persulfate (KPS) | Initiator | Merck, Darmstadt |
| ammonium persulfate (APS) | Initiator | Merck, Darmstadt |
| tert-butylhydroperoxide (TBHP) | Initiator | AkzoNobel |
| Briggolite® FF6M | Reducing Agent | Brüggemann GmbH&Co.KG, Heilbronn |
| AMP-95 | Neutralizing Agent | Angus Chemical Company, Ibbenbiiren |
| ammonia (25 wt.%) | Neutralizing Agent | Merck, Darmstadt |

(continued)

| Chemicals | Function | Supplier |
|---|---|---|
| VISIOMER® HEMA-P100 | Monomer | Evonik |
| n-butyl acrylate (n-BA) | Monomer | Sigma Aldrich |
| methyl methacrylate (MMA) | Monomer | Evonik |

*Emulsion examples*

| | |
|---|---|
| Example 1: | Emulsion comprising 15 wt.% of HEMA-P |
| Example 2: | Emulsion comprising 20 wt.% of HEMA-P (Comparative Example) |
| Example 3: | Emulsion comprising 15 wt.% of HEMA-P |
| Example 4: | Emulsion comprising 10 wt.% of HEMA-P |
| Example 5: | Emulsion comprising 5 wt.% of HEMA-P |
| Example 6: | Emulsion comprising 2.5 wt.% of HEMA-P (Comparative Example) |
| Example 7: | Emulsion comprising 15 wt.% of HEMA-P |
| Example 8: | Emulsion comprising 15 wt.% of HEMA-P |
| Example 9: | Emulsion comprising 15 wt.% of HEMA-P (Comparative Example) |

*Emulsion polymerization*

*Apparatus set-up:*

2L-Rettberg-reactor (double-wall), blade agitator (metal, 150 rpm), thermostat (filling: water), reflux condenser, two metering pumps, thermo couple

Preparation of aqueous dispersion:

1) The components A1-A3 (see table 2) were weighed into the reactor and heated up to 80 °C (internal temperature). The stirring rate was adjusted to 150 rpm.
2) The components B1-B4 (see table 2) were premixed and were added into a solution of C1-C3 to complete the monomer pre-emulsion. This mixture was emulsified with an Ultra-Turrax homogenizer at 10,000 rpm for 3 minutes.
3) D1-D2 (see Table 2) were weighed and mixed. 10% of this solution was added into the reactor at 80°C and stirred for 5 minutes.
4) After 5 min the feed of the prepared monomer pre-emulsion (B+C) was started for 15 minutes (= addition of 10% of the pre-emulsion). Afterwards, the reaction was kept for another 30 minutes without further additions.
5) The rest of the pre-emulsion (B+C) was added within 4 hours, the rest of the initiator solution D within 4.25 hours via two different feeds. After end of the feeds, the reaction was kept at 80°C for 1 hour.
6) The internal temperature of the reactor was decreased to 60°C.
7) The components E1 and E2 (see table 2) were weighed separately and added via two different feeding lines within 30 minutes.
8) The reaction was kept at 60°C for another 30 minutes to remove the residual monomers.
9) The reactor was cooled down to room temperature.

All aqueous dispersions (Examples 1-9 and reference) were prepared according to the previous described procedure except that the ratio of monomers and the neutralizing agent were varied according to Table 2.

Table 2: Composition of prepared emulsion polymers (examples and reference)

| | Example | Reference | 1 | 2 (CE) | 3 |
|---|---|---|---|---|---|
| | | 0 wt.% HEMA-P | 15 wt.% HEMA-P + NH3 [g] | 20 wt.% HEMA-P + AMP-95 [g] | 15wt.% HEMA-P + AMP-95 [g] |
| A | | | | | |
| 1 | DI water | **200** | **100** | **200** | **200** |
| 2 | sodium carbonate | **1.25** | **0.625** | **1.25** | **1.25** |
| 3 | Rewopol SB FA50 | **4** | **2** | **4** | **4** |
| B | | | | | |
| 1 | MMA | **175** | **74.4** | **140** | **148.8** |
| 2 | n-BA | **175** | **74.3** | **140** | **148.8** |
| 3 | ammonia | -- | **9.2** | -- | - |
| | AMP-95 | -- | | **34.1** | **27** |
| 4 | HEMA-P 100 | -- | **26.3** | **70** | **52.6** |
| C | | | | | |
| 1 | DI water | **290** | **145** | **290** | **290** |
| 2 | Rewopol SB FA50 | **16** | **8** | **16** | **16** |
| 3 | Emulsogen LCN 287 (70 wt.%) | **2** | **1** | **2** | **2** |
| **D** | | | | | |
| 1 | APS | **1.22** | **0.61** | **1.22** | **1.22** |
| 2 | DI water | **160** | **80** | **160** | **160** |
| **E** | | | | | |
| 1 | TBHP (70%) | **1.2** | **0.6** | **1.2** | **1.2** |
| 2 | Brüggolit FF6 M | **0.6** | **0.3** | **0.6** | **0.6** |

Table 2 continued

| | **Example** | **Reference** | **4** | **5** | **6 (CE)** |
|---|---|---|---|---|---|
| | | 0 wt.% HEMA-P | 10 wt.% HEMA-P + AMP-95 [g] | 5 wt.% HEMA-P + AMP-95 [g] | 2.5 wt.% HEMA-P + AMP-95 [9] |
| **A** | | | | | |
| 1 | DI water | **200** | **200** | **200** | **200** |
| 2 | sodium carbonate | **1.25** | **1.25** | **1.25** | **1.25** |
| 3 | Rewopol SB FA50 | **4** | **4** | **4** | **4** |
| **B** | | | | | |
| 1 | MMA | **175** | **157.5** | **166.26** | **170.63** |
| 2 | n-BA | **175** | **157.5** | **166.26** | **170.63** |
| 3 | ammonia | **0** | **--** | **--** | **--** |
| | AMP-95 | **0** | **17.96** | **8.98** | **4.5** |
| 4 | HEMA-P 100 | **0** | **35** | **17.5** | **8.75** |
| **C** | | | | | |
| 1 | DI water | **290** | **290** | **290** | **290** |
| 2 | Rewopol SB FA50 | **16** | **16** | **16** | **16** |
| 3 | Emulsogen LCN 287 (70 wt.%) | **2** | **2** | **2** | **2** |
| **D** | | | | | |
| 1 | APS | **1.22** | **1.22** | **1.22** | **1.22** |

(continued)

| | | | | | |
|---|---|---|---|---|---|
| **D** | | | | | |
| 2 | DI water | **160** | **160** | **160** | **160** |
| **E** | | | | | |
| | **Example** | **Reference** | **4** | **5** | **6 (CE)** |
| 1<br>2 | TBHP (70%)<br>Brüggolit FF6 M | **1.2**<br>**0.6** | **1.2**<br>**0.6** | **1.2**<br>**0.6** | **1.2**<br>**0.6** |

Table 2 continued

| | **Example** | **Reference** | **7** | **8** | **9 (CE)** |
|---|---|---|---|---|---|
| | | 0 wt.% HEMA-P | 15wt.% HEMA-P + NH3 [g] | 15wt.% HEMA-P + AMP-95 [g] | 15 wt.% HEMA-P [g] |
| **A** | | | | | |
| 1<br>2<br>3 | DI water<br>sodium carbonate<br>Rewopol SB FA50 | **200**<br>**1.25**<br>**4** | **100**<br>**0.625**<br>**2** | **100**<br>**0.625**<br>**2** | **100**<br>**0.625**<br>**2** |
| **B** | | | | | |
| 1<br>2 | MMA<br>n-BA | **175**<br>**175** | **74.4**<br>**74.3** | **74.4**<br>**74.3** | **74.4**<br>**74.3** |
| 3 | ammonia<br>AMP-95 | **0**<br>**0** | **9.2** | **--**<br>**13.5** | --<br>-- |
| 4 | HEMA-P 100 | **0** | **26.3** | **26.3** | **26.3** |
| **C** | | | | | |
| 1<br>2<br>3 | DI water<br>A6828 (30%)*<br>Emulsogen LCN 287 (70 wt.%) | **290**<br>**16**<br>**2** | **145**<br>**8**<br>**1** | **145**<br>**8**<br>**1** | **145**<br>**8**<br>**1** |
| **D** | | | | | |
| 1 | KPS | **1.22** | **0.61** | **0.61** | **0.61** |
| 2 | DI water | **160** | **80** | **80** | **80** |
| **E** | | | | | |
| 1<br>2 | TBHP (70%)<br>Brüggolit FF6 M | **1.2**<br>**0.6** | **0.6**<br>**0.3** | **0.6**<br>**0.3** | **0.6**<br>**0.3** |

Examples 1, 3, 4, 5, 7 and 8 are in accordance with the present invention as the content of P-containing monomers is within the claimed range of 5 wt.% to 15 wt.%.

Examples 2 and 6 are comparative examples (CE) as the content of P-containing monomers is outside the claimed range.

Example 7 is comparable with Example 1 but used different surfactants and initiator.

Example 8 is comparable with Example 3 but used different surfactants and initiator.

Example 9 is comparable with Examples 7 and 8 but no pre-neutralization with ammonia or AMP was done. Consequently, the emulsion coagulated completely during synthesis.

Basic dispersion properties like pH value, filter residue, viscosity, solid content, and particle size of the prepared dispersions are reported in the following Table 3 for examples 1-6 and the reference.

Table 3: Basic dispersion properties

| Example | Reference | 1 | 2 (CE) | 3 |
|---|---|---|---|---|
| nBA [wt.%] | 50.00 | 42.50 | 40.00 | 42.50 |
| MMA [wt.%] | 50.00 | 42.50 | 40.00 | 42.50 |
| HEMA-P [wt.%] | 0.00 | 15.00 | 20.00 | 15.00 |
| pH value | 6.0 | 4.0 | 6.0 | 6.0 |
| filter residue | 0.19% | 0.24% | Not filterable, coagulate formed | 0.19% |
| Viscosity (Sp. I, 23°C) [mPas] | 6 | 885 | 10600 (Sp III/6) | 285 |
| solid content (measured) [%] | 33.9 | 31.2 | - | 35.2 |
| solid content (theoret.) [%] | 35.2 | 35.0 | - | 34.3 |
| particle size (diameter) [nm] | 182.9 | 282.5 | - | 358.9 |

Table 3 continued

| Example | Reference | 4 | 5 | 6 (CE) |
|---|---|---|---|---|
| nBA [wt.%] | 50.00 | 45.00 | 47.50 | 48.75 |
| MMA [wt.%] | 50.00 | 45.00 | 47.50 | 48.75 |
| HEMA-P [wt.%] | 0.00 | 10.00 | 5.00 | 2.50 |
| pH value | 6.0 | 6.0 | 6.0 | 6.0 |
| filter residue | 0.19% | 0.19% | 0.19% | 0.19% |
| Viscosity (Sp. I, 23°C) [mPas] | 6 | 23 | 15 | 10 |
| solid content (measured) [%] | 33.9 | 35.5 | 33.8 | 34.4 |
| solid content (theoret.) [%] | 35.2 | 34.6 | 34.9 | 35.5 |
| particle size (diameter) [nm] | 182.9 | 250.3 | 164.5 | 225.3 |

Table 3 shows that HEMA-P containing dispersions were successfully synthesized with a content of HEMA-P up 15 wt.% according to the mentioned procedure. Example 2 shows that higher contents of HEMA-P lead to coagulation during the emulsion process and therefore to instable dispersions.

Examples 7 and 8 were subjected to storage testing. The results are given in the following Table 4.

Table 4: Storage testing of Examples 7 and 8.

| Example | 7 | 8 |
|---|---|---|
| nBA [wt.%] | 42.50 | 42.50 |
| MMA [wt.%] | 42.50 | 42.50 |
| HEMA-P [wt.%] | 15.00 | 15.00 |
| Storage stability @60°C for 1 month | Coagulated | Stable, no gel formation |

Table 4 shows that the dispersion prepared with the use of AMP-95 as neutralizing agent (see Example 8) showed an increased storage stability at elevated temperatures compared to dispersions prepared without any neutralizing agent or with ammonia solution as neutralizing agent.

*Dispersion analysis*

The minimum film formation temperature (MFT or MFFT) was determined according to ISO 2115. The Brookfield viscosity was determined at 23°C using a Brookfield rotational viscometer LVT DV II with safety bar using spindle I at different speeds.

The solid content was measured using a moisture analyzer HB43-S (Mettler-Toledo). The pH measurements

were performed using a pH meter Climatic 761 (Knick) using a pH/Pt-1000 single-rod measuring cell (glass with ceramic diaphragm) and 3-molar KCl solution.

The particle size was measured using a Delsa Nonosizer (Beckmann Coulter).

*Preparation of the polymer films*

Film preparation for Pendulum Hardness

The films were applied on glass plates with a nominal wet film thickness of 300 μm with a quadrangular film applicator and afterwards stored in a climatic room at 23°C and 50% humidity Afterwards, a regular measurement of the pendulum hardness (according to König) was carried out.

Film preparation for water uptake and MIBK uptake

Forms for the polymer films were prepared out of glass plates and a frame made of silicon. The needed mass of the dispersion (calculated via its solid content and the base area of the used form) was applied on the glass plate (nominal film thickness after drying: 0.5 mm).

Afterwards, the prepared films were stored in a climatic room at 23°C and 50% humidity for 7 days.

Film preparation for resistance test (furniture test)

The polymers were applied on substrates made of pine wood with a nominal wet film thickness of 300 μm with a quadrangular film applicator and afterwards stored in a climatic room at 23°C and 50% humidity for 7days.

*Test procedures for film testing*

Pendulum Hardness (according to Königq)

The tests were carried out with a Pendulum Hardness Tester from BYK Mallinckrodt according to the "König" method.

For all samples a repeat determination was carried out at two different areas of the prepared films, the given results are the average of these measurements.

The results are given as the damping time in seconds (time taken for the oscillation amplitude to decrease from a deflection of 6 to 3, oscillation period: 1.4 s).

The measurement was repeated regularly after 1, 2, 3, 4, 7 and 14 days.

According to standards: ISO 1522, ASTM D4366, DIN 53157

Water uptake

Specimen of 20 x 15 x 0.5 mm were cut out of the prepared films and weighed on an analytical balance.

Afterwards, they were stored in glass bottles (50 mL, clear, wide-necked) on mech of stainless steel in 45 mL DI-water at room temperature.

The polymers were put out of the water after 4 hours, 1 day, 2 days, 3 days and 4 days, dabbed with a piece of cloth to remove the water and weighed again.

After 4 days the specimens were re-dried in a drying oven at 80°C for 18 hours and weighed again.

Water uptake, loss of weight and real swelling were calculated from the gained values according to the following equations:

$$\text{water uptake} = \frac{m_3 - m_2}{m_2 - m_1} \times 100\% \text{ resp. } \frac{(m_{s3} - m_{s1}) - (m_2 - m_1)}{m_2 - m_1} \times 100\%$$

$$\text{loss of weight} = \frac{m_2 - m_4}{m_2 - m_1} \times 100\% \text{ resp. } \frac{(m_2 - m_1) - (m_{s4} - m_{s1})}{m_2 - m_1} \times 100\%$$

$$\text{true swelling} = \frac{m_3 - m_4}{m_4 - m_1} \times 100\% \text{ resp. } \frac{m_{s3} - m_{s4}}{m_{s4} - m_{s1}} \times 100\%$$

$$\text{resp. } \frac{\text{water uptake [\%]} + \text{loss of weight [\%]}}{100\% - \text{loss of weight [\%]}} \times 100\%$$

MIBK uptake

Specimen of 20 x 15 x 0.5 mm were cut out of the prepared films and weighed on an analytical balance.

Afterwards, they were stored in glass bottles (50 mL, clear, wide-necked) in 40 mL isobutylmethylketone on mesh of stainless steel (with determined tare weight) at room temperature. The swollen polymers were removed together with the steel mesh after 4 hours, dabbed with a piece of cloth to remove the MIBK and weighed again.

Afterwards, the specimens were re-dried in a drying oven at 80°C for 18 hours and weighed again. For all samples a repeat determination was carried out.

MIBK uptake, loss of weight and real swelling were calculated from the gained values according to equations mentioned already for the water uptake measurements.

Resistance test ("Furniture Test")

Round filter papers (45 mm, MN 621/130, Macherey-Nagel) soaked with the test liquids were applied to the film surfaces, covered with a petri dish, and kept there for 1 hour respectively 16 hours at room temperature. After removing the filter papers the surfaces were visually judged according to the rating described in DIN 68861-1 (according to DIN EN 12720).

- 5 no visual changes of the surface
- 4 slight changes in gloss or color, only visual under certain light incidence, barely visibly marks
- 3 slight marks, visible from diverse perspectives, for example a nearly complete circular area
- 2 distinct marks, the surface however is widely unaltered
- 1 distinct mark, the surface is clearly altered and partly or completely destroyed, or the filter paper adheres to the film surface

Table 5: Test results from the pendulum hardness test of Examples 1, 3-6 and reference.

| Example | | 1 | 3 | 4 | 5 | 6 | Reference |
|---|---|---|---|---|---|---|---|
| nBA [wt.%] | | 42.50 | 42.50 | 45.00 | 47.50 | 48.75 | 50.00 |
| MMA [wt.%] | | 42.50 | 42.50 | 45.00 | 47.50 | 48.75 | 50.00 |
| HEMA-P [wt.%] | | 15.00 | 15.00 | 10.00 | 5.00 | 2.50 | 0.00 |
| Pendulum Hardness | 1 day | 18 s | 11 s | 13 s | 10 s | 17 s * | 20 s * |
| | 2 days | 20 s | 13 s | 13 s | 11 s | 18 s * | 20 s * |
| | 4 days | 24 s | 15 s | 15 s | 13 s | 20 s * | 24 s * |
| | 7 days | 25 s | 17 s | 18 s | 15 s | 21 s * | 22 s * |
| | 14 days | 25 s | 17 s | 18 s | 17 s | 24 s * | 25 s * |

* The dispersion flows on the glass and forms only an uneven film --> fluctuating values, depending on the measured area.

Table 5 shows that Example 6 containing 2.50 wt% HEMA-P does not lead to stable polymer films due to the lower content of HEMA-P.

Table 6: Results from water- and solvent uptake test of Examples 1, 3-6 and reference.

| Example | | 1 | 3 | 4 | Reference |
|---|---|---|---|---|---|
| nBA [wt.%] | | 42.50 | 42.50 | 45.00 | 50.00 |
| MMA [wt.%] | | 42.50 | 42.50 | 45.00 | 50.00 |
| HEMA-P [wt.%] | | 15.00 | 15.00 | 10.00 | 0.00 |
| water uptake (4 d) | water uptake | film disintegrates | 312.2% | 145.4% | 28.4% |
| | loss of weight | | 18.2% | 13.3% | 0.6% |
| | true swelling | | 404.0% | 183.0% | 29.2% |
| MIBK uptake (4 h) | MIBK uptake | 98.5% | 114.4% | 177.4% | 1426.3% |
| | loss of weight | 7.1% | 11.4% | 14.0% | 60.2% |
| | true swelling | 113.5% | 141.9% | 222.4% | 3737.6% |
| | optical judgement | dimensionally stable, swollen | dimensionally stable, swollen | dimensionally stable, swollen | film turns jellylike |

Table 6 continued

| Example | | 5 | 6 | Reference |
|---|---|---|---|---|
| nBA [wt.%] | | 47.50 | 48.75 | 50.00 |
| MMA [wt.%] | | 47.50 | 48.75 | 50.00 |
| HEMA-P [wt.%] | | 5.00 | 2.50 | 0.00 |
| water uptake (4 d) | water uptake | 64.2% | 63.4% | 28.4% |
| | loss of weight | 8.3% | 3.8% | 0.6% |
| | true swelling | 79.1% | 69.9% | 29.2% |
| MIBK uptake (4 h) | MIBK uptake | 289.6% | 380.6% | 1426.3% |
| | loss of weight | 20.9% | 22.1% | 60.2% |
| | true swelling | 392.4% | 514.3% | 3737.6% |
| | optical judgement | dimensionally stable, highly swollen | highly swollen, film disintegrates | film turns jellylike |

Table 7: Results of resistance test of Examples 1, 3-6 and reference.

| Example | 1 | 3 | 4 | 5 | 6 | Reference |
|---|---|---|---|---|---|---|
| nBA [wt.%] | 42.50 | 42.50 | 45.00 | 47.50 | 48.75 | 50.00 |
| MMA [wt.%] | 42.50 | 42.50 | 45.00 | 47.50 | 48.75 | 50.00 |
| HEMA-P [wt.%] | 15.00 | 15.00 | 10.00 | 5.00 | 2.50 | 0.00 |

| Example | | 1 | 3 | 4 | 5 | 6 | Reference |
|---|---|---|---|---|---|---|---|
| furniture test (after 1 h) | ethanol (48%) | 3 | 1 | 1 | 4 | 4 | 4 |
| | ammonia solution (10%) | 2 | 2 | 2 | 2 | 2 | 4 |
| | acetic acid (15%) | 4 | 4 | 4 | 3 | 4 | 4 |
| | Nivea® | 5 | 5 | 5 | 5 | 5 | 5 |
| furniture test (after 16 h) | ethanol (48%) | 1 | 1 | 1 | 1 | 3 | 1 |
| | ammonia solution (10%) | 2 | 2 | 2 | 2 | 2 | 3 |
| | acetic acid (15%) | 1 | 1 | 1 | 3 | 3 | 2 |
| | Nivea®*) | 4 | 4 | 4 | 4 | 4 | 4 |

*) Nivea soft hand cream

## Claims

**1.** Monomer composition, comprising:

(a) 5 wt.% to 15 wt.% of a phosphorus-containing monomer;
(b) 70 wt.% to 95 wt.% of straight-chained or branched C1-18 alkyl (meth)acrylates; and
(c) 0 wt.% to 15 wt.% of one or more further ethylenically unsaturated comonomers different than monomers (a) and (b),
based on the total weight of the monomer composition; and
(d) a base selected from the group consisting of ammonia and 2-amino-2-methyl-1-propanol being present in the composition in a molar ratio of (a) to (d) = 1:1.1 to 1:1.2, preferably 1:1.1.

**2.** The monomer composition according to claim 1, wherein the phosphorous containing monomer (a) is selected from the general formula (I)

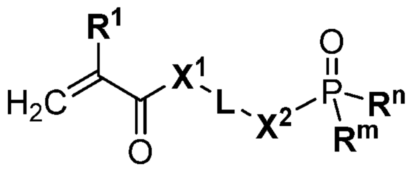

(I)

wherein

$\mathbf{R^1}$ denotes H or methyl,
$\mathbf{R^m}$ denotes $O^-$ or OH,
**R''** denotes $O^-$, OH, **Z**, $\mathbf{X^2}$-P(=O)$\mathbf{R^{n+1}R^{m+1}}$
**n, m** independently denotes an integer of 2-15,
$\mathbf{X^1}$, $\mathbf{X^2}$ independently denote O, $CH_2$, S, NH,

**Z** = 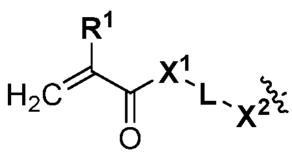

and
**L** denotes a hydrocarbon linker optionally comprising one or more heteroatoms.

3. The monomer composition according to claim 1, wherein the phosphorous containing monomer (a) is selected from the general formula (Ia)

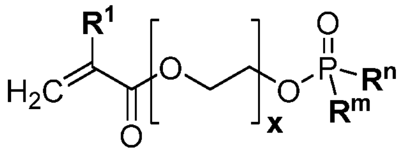

(Ia)

wherein

**$R^1$** denotes H or methyl,
**$R^n$,** $R^m$ independently denote $O^-$, OH, **Z,** O-P(=O)**$R^{n+1}R^{m+1}$,**
**n, m** independently denote an integer of 2-15,
**x** denotes an integer of 1-20,

**Z** =

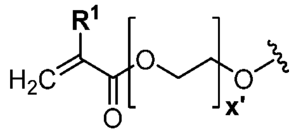

and
**x'** denotes an integer of 1-20.

4. The monomer composition according to claim 1, wherein the phosphorous containing monomer (a) is 2-hydroxyethylmethacrylate-phosphate (HEMA-P).

5. The monomer composition according to claim 1, wherein the base (d) is 2-amino-2-methyl-1-propanol.

6. The monomer composition according to claim 1, wherein the monomers (b) are selected from the group consisting of straight-chained or branched C1-4 alkyl (meth)acrylates.

7. The monomer composition according to claim 1, consisting of:

(a) 5 wt.% to 15 wt.%, preferably 10 wt.% to 15 wt.%, of a phosphorous-containing monomer according to formula (I);
(b) 75 wt.% to 95 wt.%, preferably 80 wt.% to 95 wt.%, of straight-chained or branched C1-18 alkyl (meth) acrylates; and
(c) 0 wt.% to 10 wt.% of one or more further comonomers,
based on the total weight of the monomer composition; and
(d) a base selected from the group consisting of ammonia and 2-amino-2-methyl-1-propanol being present in the composition in a molar ratio of (a) to (d) = 1:1.1 to 1:1.2, preferably 1:1.1.

8. The monomer composition according to claim 1, consisting of:

(a) 5 wt.% to 15 wt.% of a phosphorous containing monomer;
(b1) 40 wt.% to 50 wt.% of methyl methacrylate;
(b2) 40 wt.% to 50 wt.% of n-butyl acrylate; and
(d) 2-amino-2-methyl-1-propanol being present in the composition in a molar ratio of (a) to (d) = 1:1.1.

9. Process for preparing a polymer dispersion comprising the steps of:

(i) charging a reactor with water, a buffer substance and at least one surfactant;
(ii) preparing a monomer composition, comprising:

(a) 5 wt.% to 15 wt.% of a phosphorous-containing monomer;
(b) 70 wt.% to 95 wt.% of straight-chained or branched C1-18 alkyl (meth)acrylates; and

(c) 0 wt.% to 15 wt.% of one or more further ethylenically unsaturated comonomers different than monomers (b) and (c),
based on the total weight of the monomer composition; and
(d) a base selected from the group consisting of ammonia and 2-amino-2-methyl-1-propanol being present in the composition in a molar ratio of (a) to (d) = 1:1.1 to 1:1.2, preferably 1:1.1;

(iii) preparing a pre-emulsion, comprising:

(a) the monomer composition prepared in step (ii); and
(b) water; and
(c) at least one surfactant;

(iv) preparing an aqueous initiator solution **1** comprising 0.1 wt.% to 0.5 wt.% of an initiator **1,** based on the total amount of monomer composition;
(v) adding 5% to 15% of the initiator solution **1** prepared in step (iv) to the reactor;
(vi) adding 5% to 15% of the pre-emulsion prepared in step (iii) to the reactor to receive a seed-emulsion;
(vii) feeding the residual 85% to 95% of the pre-emulsion prepared in step (iii) to the reactor;
(viii) feeding 85% to 95% of the initiator solution 1 prepared in step (iv) to the reactor;
(ix) preparing an aqueous initiator solution **2** comprising 0.1 wt.% to 0.5 wt.% of an initiator 2 and 0.05 wt.% to 0.3 wt.% of a reducing agent; and
(x) feeding the initiator solution **2** prepared in step (ix) to the reactor to receive the targeted polymer dispersion.

**10.** The process according to claim 9, wherein the buffer substance is selected from the group consisting of sodium tetraborate, sodium carbonate and acetate buffer.

**11.** The process according to claim 9, wherein the surfactant used in step (i) is selected from the group consisting of are anionic emulsifiers, nonionic emulsifiers and mixtures thereof.

**12.** The process according to claim 9, wherein initiator **1** and initiator **2** can be the same or different and are selected from the group consisting of tert-butyl hydroperoxide (TBHP), cumene hydroperoxide, hydrogen peroxide, ammonium persulfate, sodium persulfate and potassium persulfate.

**13.** Polymer dispersion, comprising:

(A) 20 wt.% to 80 wt.%, preferably 30 wt.% to 60 wt.%, more preferably 30 wt.% to 40 wt.%, of a polymer, comprising:

(a) 5 wt.% to 15 wt.%, preferably 10 wt.% to 15 wt.%, of a phosphorous-containing monomer according to formula (I);
(b) 75 wt.% to 95 wt.%, preferably 80 wt.% to 95 wt.%, of straight-chained or branched C1-18 alkyl (meth) acrylates; and
(c) 0 wt.% to 10 wt.% of one or more further comonomers,
based on the total weight of the monomer composition; and
(d) 2-amino-2-methyl-1-propanol being present in the composition in a molar ratio of (a) to (d) = 1:1.1 to 1:1.2, preferably 1:1.1; and

(B) 20 wt.% to 80 wt.%, preferably 40 wt.% to 70 wt.%, more preferably 60 wt.% to 70 wt.%, of water.

**14.** The polymer dispersion according to claim 13, comprising:

(A) 20 wt.% to 80 wt.%, preferably 30 wt.% to 60 wt.%, more preferably 30 wt.% to 40 wt.%, of a polymer, comprising:

(a) 5 wt.% to 15 wt.% of a phosphorous containing monomer;
(b1) 40 wt.% to 50 wt.% of methyl methacrylate; and
(b2) 40 wt.% to 50 wt.% of n-butyl acrylate; and
(d) 2-amino-2-methyl-1-propanol being present in the composition in a molar ratio of (a) to (d) = 1:1.1 to 1:1.2, preferably 1:1.1; and

(B) 20 wt.% to 80 wt.%, preferably 40 wt.% to 70 wt.%, more preferably 60 wt.% to 70 wt.%, of water.

**15.** The polymer dispersion according to claim 13 or 14 wherein the phosphorous containing monomer (a) is 2-hydroxyethyl-methacrylate-phosphate (HEMA-P).

## Patentansprüche

**1.** Monomerzusammensetzung, umfassend:

(a) 5 Gew.-% bis 15 Gew.-% eines phosphorhaltigen Monomers;
(b) 70 Gew.-% bis 95 Gew.-% geradkettige oder verzweigte C1-18-Alkyl(meth)acrylate; und
(c) 0 Gew.-% bis 15 Gew.-% eines oder mehrerer weiterer ethylenisch ungesättigter Comonomere, die sich von den Monomeren (a) und (b) unterscheiden,
bezogen auf das Gesamtgewicht der Monomerzusammensetzung; und
(d) eine aus der Gruppe bestehend aus Ammoniak und 2-Amino-2-methyl-1-propanol ausgewählte Base, die in der Zusammensetzung in einem Molverhältnis von (a) zu (d) = 1:1,1 bis 1:1,2, vorzugsweise 1:1,1, vorliegt.

**2.** Monomerzusammensetzung nach Anspruch 1, wobei das phosphorhaltige Monomer (a) aus der allgemeinen Formel (I)

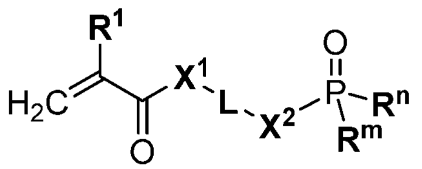

(I)

ausgewählt ist, wobei
$R^1$ für H oder Methyl steht,
$R^m$ für $O^-$ oder OH steht,
$R^n$ für $O^-$, OH, Z, $X^2$-P(=O)$R^{n+1}R^{m+1}$ steht, n, m unabhängig für eine ganze Zahl von 2-15 steht, $X^1$, $X^2$ unabhängig für O, $CH_2$, S, NH stehen,

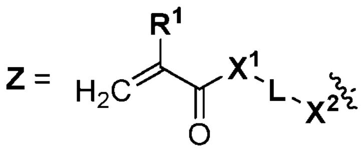

und
L für einen Kohlenwasserstoff-Linker steht, der gegebenenfalls ein oder mehrere Heteroatome umfasst.

**3.** Monomerzusammensetzung nach Anspruch 1, wobei das phosphorhaltige Monomer (a) aus der allgemeinen Formel (Ia)

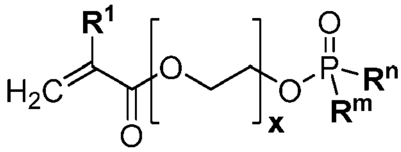

(Ia)

ausgewählt ist, wobei
$R^1$ für H oder Methyl steht,
$R^n$, $R^m$ unabhängig für $O^-$, OH, Z, O-P(=O)$R^{n+1}R^{m+1}$ stehen,
n, m unabhängig für eine ganze Zahl von 2-15 stehen,

x für eine ganze Zahl von 1-20 steht,

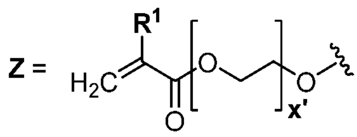

und
x’ für eine ganze Zahl von 1-20 steht.

**4.** Monomerzusammensetzung nach Anspruch 1, wobei es sich bei dem phosphorhaltigen Monomer (a) um 2-Hydroxyethylmethacrylat-phosphat (HEMA-P) handelt.

**5.** Monomerzusammensetzung nach Anspruch 1, wobei es sich bei der Base (d) um 2-Amino-2-methyl-1-propanol handelt.

**6.** Monomerzusammensetzung nach Anspruch 1, wobei die Monomere (b) aus der Gruppe bestehend aus geradkettigen oder verzweigten C1-4-Alkyl(meth)acrylaten ausgewählt sind.

**7.** Monomerzusammensetzung nach Anspruch 1, bestehend aus:

(a) 5 Gew.-% bis 15 Gew.-%, bevorzugt 10 Gew.-% bis 15 Gew.-%, eines phosphorhaltigen Monomers gemäß Formel (I);
(b) 75 Gew.-% bis 95 Gew.-%, bevorzugt 80 Gew.-% bis 95 Gew.-%, geradkettigen oder verzweigten C1-18-Alkyl(meth)acrylaten; und
(c) 0 Gew.-% bis 10 Gew.-% eines oder mehrerer weiterer Comonomere,
bezogen auf das Gesamtgewicht der Monomerzusammensetzung; und
(d) einer aus der Gruppe bestehend aus Ammoniak und 2-Amino-2-methyl-1-propanol ausgewählten Base, die in der Zusammensetzung in einem Molverhältnis von (a) zu (d) = 1:1,1 bis 1:1,2, vorzugsweise 1:1,1, vorliegt.

**8.** Monomerzusammensetzung nach Anspruch 1, bestehend aus:

(a) 5 Gew.-% bis 15 Gew.-% eines phosphorhaltigen Monomers;
(b1) 40 Gew.-% bis 50 Gew.-% Methylmethacrylat;
(b2) 40 Gew.-% bis 50 Gew.-% n-Butylacrylat; und
(d) 2-Amino-2-methyl-1-propanol, das in der Zusammensetzung in einem Molverhältnis von (a) zu (d) = 1:1,1 vorliegt.

**9.** Verfahren zur Herstellung einer Polymerdispersion, umfassend die folgenden Schritte:

(i) Beschicken eines Reaktors mit Wasser, einer Puffersubstanz und mindestens einem Tensid;
(ii) Herstellen einer Monomerzusammensetzung, die Folgendes umfasst:

(a) 5 Gew.-% bis 15 Gew.-% eines phosphorhaltigen Monomers;
(b) 70 Gew.-% bis 95 Gew.-% geradkettige oder verzweigte C1-18-Alkyl(meth)acrylate; und
(c) 0 Gew.-% bis 15 Gew.-% eines oder mehrerer weiterer ethylenisch ungesättigter Comonomere, die sich von den Monomeren (b) und (c) unterscheiden,
bezogen auf das Gesamtgewicht der Monomerzusammensetzung; und
(d) eine aus der Gruppe bestehend aus Ammoniak und 2-Amino-2-methyl-1-propanol ausgewählte Base, die in der Zusammensetzung in einem Molverhältnis von (a) zu (d) = 1:1,1 bis 1:1,2, vorzugsweise 1:1,1, vorliegt;

(iii) Herstellen einer Voremulsion, die Folgendes umfasst:

(a) die in Schritt (ii) hergestellte Monomerzusammensetzung; und
(b) Wasser; und
(c) mindestens ein Tensid;

(iv) Herstellen einer wässrigen Initiatorlösung 1, die 0,1 Gew.-% bis 0,5 Gew.-% eines Initiators 1, bezogen auf die Gesamtmenge der Monomerzusammensetzung, umfasst;
(v) Zugeben von 5 % bis 15 % der in Schritt (iv) hergestellten Initiatorlösung 1 zum Reaktor;
(vi) Zugeben von 5 % bis 15 % der in Schritt (iii) hergestellten Voremulsion zum Reaktor, so dass eine Saat-Emulsion erhalten wird;
(vii) Zuleiten der restlichen 85 % bis 95 % der in Schritt (iii) hergestellten Voremulsion in den Reaktor;
(viii) Zuleiten von 85 % bis 95 % der in Schritt (iv) hergestellten Initiatorlösung 1 in den Reaktor;
(ix) Herstellen einer wässrigen Initiatorlösung 2, die 0,1 Gew.-% bis 0,5 Gew.-% eines Initiators 2 und 0,05 Gew.-% bis 0,3 Gew.-% eines Reduktionsmittels umfasst; und
(x) Zuleiten der in Schritt (ix) hergestellten Initiatorlösung 2 in den Reaktor, so dass die angestrebte Polymerdispersion erhalten wird.

**10.** Verfahren nach Anspruch 9, wobei die Puffersubstanz aus der Gruppe bestehend aus Natriumtetraborat, Natriumcarbonat und Acetatpuffer ausgewählt ist.

**11.** Verfahren nach Anspruch 9, wobei das in Schritt (i) verwendete Tensid aus der Gruppe bestehend aus anionischen Emulgatoren, nichtionischen Emulgatoren und Mischungen davon ausgewählt ist.

**12.** Verfahren nach Anspruch 9, wobei Initiator 1 und Initiator 2 gleich oder verschieden sein können und aus der Gruppe bestehend aus tert-Butylhydroperoxid (TBHP), Cumolhydroperoxid, Wasserstoffperoxid, Ammoniumpersulfat, Natriumpersulfat und Kaliumpersulfat ausgewählt sind.

**13.** Polymerdispersion, umfassend:

(A) 20 Gew.-% bis 80 Gew.-%, bevorzugt 30 Gew.-% bis 60 Gew.-%, bevorzugter 30 Gew.-% bis 40 Gew.-%, eines Polymers, umfassend:

(a) 5 Gew.-% bis 15 Gew.-%, bevorzugt 10 Gew.-% bis 15 Gew.-%, eines phosphorhaltigen Monomers gemäß Formel (I);
(b) 75 Gew.-% bis 95 Gew.-%, bevorzugt 80 Gew.-% bis 95 Gew.-%, geradkettige oder verzweigte C1-18-Alkyl(meth)acrylate; und
(c) 0 Gew.-% bis 10 Gew.-% eines oder mehrerer weiterer Comonomere,
bezogen auf das Gesamtgewicht der Monomerzusammensetzung; und
(d) 2-Amino-2-methyl-1-propanol, das in der Zusammensetzung in einem Molverhältnis von (a) zu (d) = 1:1,1 bis 1:1,2, vorzugsweise 1:1,1, vorliegt; und

(B) 20 Gew.-% bis 80 Gew.-%, bevorzugt 40 Gew.-% bis 70 Gew.-%, bevorzugter 60 Gew.-% bis 70 Gew.-%, Wasser.

**14.** Polymerdispersion nach Anspruch 13, umfassend:

(A) 20 Gew.-% bis 80 Gew.-%, bevorzugt 30 Gew.-% bis 60 Gew.-%, bevorzugter 30 Gew.-% bis 40 Gew.-%, eines Polymers, umfassend:

(a) 5 Gew.-% bis 15 Gew.-% eines phosphorhaltigen Monomers;
(b1) 40 Gew.-% bis 50 Gew.-% Methylmethacrylat; und
(b2) 40 Gew.-% bis 50 Gew.-% n-Butylacrylat; und
(d) 2-Amino-2-methyl-1-propanol, das in der Zusammensetzung in einem Molverhältnis von (a) zu (d) = 1:1,1 bis 1:1,2, vorzugsweise 1:1,1, vorliegt; und

(B) 20 Gew.-% bis 80 Gew.-%, bevorzugt 40 Gew.-% bis 70 Gew.-%, bevorzugter 60 Gew.-% bis 70 Gew.-%, Wasser.

**15.** Polymerdispersion nach Anspruch 13 oder 14, wobei es sich bei dem phosphorhaltigen Monomer (a) um 2-Hydroxyethylmethacrylat-phosphat (HEMA-P) handelt.

## Revendications

**1.** Composition de monomères, comprenant :

(a) 5 % en poids à 15 % en poids d'un monomère contenant du phosphore ;
(b) 70 % en poids à 95 % en poids de (méth)acrylates d'alkyle en C1-18 ramifié ou à chaîne linéaire ; et
(c) 0 % en poids à 15 % en poids d'un ou plusieurs autres comonomères éthyléniquement insaturés différents des monomères (a) et (b),
sur la base du poids total de la composition de monomères ; et
(d) une base choisie dans le groupe constitué par l'ammoniac et le 2-amino-2-méthyl-1-propanol étant présente dans la composition en un rapport molaire de (a) sur (d) = 1:1,1 à 1:1,2, de préférence 1:1,1.

**2.** Composition de monomères selon la revendication 1, dans laquelle le monomère contenant du phosphore (a) est choisi parmi la formule générale (I)

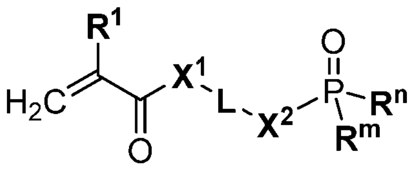

(I)

dans laquelle

$R^1$ désigne H ou méthyle,
$R^m$ désigne $O^-$ ou OH,
$R^n$ désigne $O^-$, OH, Z, $X^2$-P(=O)$R^{n+1}R^{m+1}$,
n, m désigne indépendamment un entier de 2 à 15,
$X^1$, $X^2$ désignent indépendamment O, $CH_2$, S, NH,

Z = 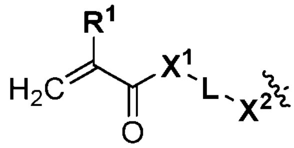

et
L désigne un lieur hydrocarboné comprenant éventuellement un ou plusieurs hétéroatomes.

**3.** Composition de monomères selon la revendication 1, dans laquelle le monomère contenant du phosphore (a) est choisi parmi la formule générale (Ia)

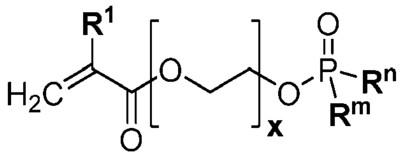

(Ia)

dans laquelle

$R^1$ désigne H ou méthyle,
$R^n$, $R^m$ désignent indépendamment $O^-$, OH, Z, O-P(=O)$R^{n+1}$+$R^{m+1}$,
n, m désignent indépendamment un entier de 2 à 15,
x désigne un entier de 1 à 20,

Z = 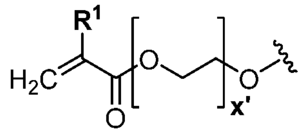

et
x' désigne un entier de 1 à 20.

**4.** Composition de monomères selon la revendication 1, dans laquelle le monomère contenant du phosphore (a) est le méthacrylate-phosphate de 2-hydroxyéthyle (HEMA-P).

**5.** Composition de monomères selon la revendication 1, dans laquelle la base (d) est le 2-amino-2-méthyl-1-propanol.

**6.** Composition de monomères selon la revendication 1, dans laquelle les monomères (b) sont choisis dans le groupe constitué par les (méth)acrylates d'alkyle en C1-4 ramifié ou à chaîne linéaire.

**7.** Composition de monomères selon la revendication 1, constituée par :

(a) 5 % en poids à 15 % en poids, de préférence 10 % en poids à 15 % en poids, d'un monomère contenant du phosphore selon la formule (I) ;
(b) 75 % en poids à 95 % en poids, de préférence 80 % en poids à 95 % en poids de (méth)acrylates d'alkyle en C1-18 ramifié ou à chaîne linéaire ; et
(c) 0 % en poids à 10 % en poids d'un ou plusieurs autres comonomères,
sur la base du poids total de la composition de monomères ; et
(d) une base choisie dans le groupe constitué par l'ammoniac et le 2-amino-2-méthyl-1-propanol étant présente dans la composition en un rapport molaire de (a) sur (d) = 1:1,1 à 1:1,2, de préférence 1:1,1.

**8.** Composition de monomères selon la revendication 1, constituée par :

(a) 5 % en poids à 15 % en poids d'un monomère contenant du phosphore ;
(b1) 40 % en poids à 50 % en poids de méthacrylate de méthyle ;
(b2) 40 % en poids à 50 % en poids d'acrylate de n-butyle ; et
(d) du 2-amino-2-méthyl-1-propanol qui est présent dans la composition en un rapport molaire de (a) sur (d) = 1:1,1.

**9.** Procédé pour la préparation d'une dispersion de polymères comprenant les étapes de :

(i) chargement d'un réacteur avec de l'eau, une substance tampon et au moins un tensioactif ;
(ii) préparation d'une composition de monomères, comprenant :

(a) 5 % en poids à 15 % en poids d'un monomère contenant du phosphore ;
(b) 70 % en poids à 95 % en poids de (méth)acrylates d'alkyle en C1-18 ramifié ou à chaîne linéaire ; et
(c) 0 % en poids à 15 % en poids d'un ou plusieurs autres comonomères éthyléniquement insaturés différents des monomères (b) et (c),
sur la base du poids total de la composition de monomères ; et
(d) une base choisie dans le groupe constitué par l'ammoniac et le 2-amino-2-méthyl-1-propanol qui est présente dans la composition en un rapport molaire de (a) sur (d) = 1:1,1 à 1:1,2, de préférence 1:1,1 ;

(iii) préparation d'une pré-émulsion, comprenant :

(a) la composition de monomères préparée à l'étape (ii) ; et
(b) de l'eau ; et
(c) au moins un tensioactif ;

(iv) préparation d'une solution aqueuse d'initiateur 1 comprenant 0,1 % en poids à 0,5 % en poids d'un initiateur 1, par rapport à la quantité totale de la composition de monomères ;
(v) ajout de 5 % à 15 % de la solution d'initiateur 1 préparée à l'étape (iv) dans le réacteur ;
(vi) ajout de 5 % à 15 % de la pré-émulsion préparée à l'étape (iii) dans le réacteur pour recevoir une émulsion

d'ensemencement ;
(vii) alimentation des 85 % à 95 % résiduels de la pré-émulsion préparée à l'étape (iii) dans le réacteur ;
(viii) alimentation de 85 % à 95 % de la solution d'initiateur 1 préparée à l'étape (iv) dans le réacteur ;
(ix) préparation d'une solution aqueuse d'initiateur 2 comprenant 0,1 % en poids à 0,5 % en poids d'un initiateur 2 et 0,05 % en poids à 0,3 % en poids d'un agent réducteur ; et
(x) alimentation de la solution d'initiateur 2 préparée à l'étape (ix) dans le réacteur pour recevoir la dispersion de polymère ciblée.

**10.** Procédé selon la revendication 9, dans lequel la substance tampon est choisie dans le groupe constitué par le tétraborate de sodium, le carbonate de sodium et un tampon acétate.

**11.** Procédé selon la revendication 9, dans lequel le tensioactif utilisé dans l'étape (i) est choisi dans le groupe constitué par les émulsifiants anioniques, les émulsifiants non ioniques et leurs mélanges.

**12.** Procédé selon la revendication 9, dans lequel l'initiateur 1 et l'initiateur 2 peuvent être identiques ou différents et sont choisis dans le groupe constitué par l'hydroperoxyde de tert-butyle (TBHP), l'hydroperoxyde de cumène, le peroxyde d'hydrogène, le persulfate d'ammonium, le persulfate de sodium et le persulfate de potassium.

**13.** Dispersion de polymère, comprenant :

(A) 20 % en poids à 80 % en poids, de préférence 30 % en poids à 60 % en poids, plus préférablement 30 % en poids à 40 % en poids, d'un polymère, comprenant :

(a) 5 % en poids à 15 % en poids, de préférence 10 % en poids à 15 % en poids, d'un monomère contenant du phosphore selon la formule (I) ;
(b) 75 % en poids à 95 % en poids, de préférence 80 % en poids à 95 % en poids de (méth)acrylates d'alkyle en C1-18 ramifié ou à chaîne linéaire ; et
(c) 0 % en poids à 10 % en poids d'un ou plusieurs autres comonomères,
sur la base du poids total de la composition de monomères ; et
(d) du 2-amino-2-méthyl-1-propanol qui est présent dans la composition en un rapport molaire de (a) sur (d) = 1:1,1 à 1:1,2, de préférence 1:1,1 ; et

(B) 20 % en poids à 80 % en poids, de préférence 40 % en poids à 70 % en poids, plus préférablement 60 % en poids à 70 % en poids, d'eau.

**14.** Dispersion de polymère selon la revendication 13, comprenant :

(A) 20 % en poids à 80 % en poids, de préférence 30 % en poids à 60 % en poids, plus préférablement 30 % en poids à 40 % en poids, d'un polymère, comprenant :

(a) 5 % en poids à 15 % en poids d'un monomère contenant du phosphore ;
(b1) 40 % en poids à 50 % en poids de méthacrylate de méthyle ; et
(b2) 40 % en poids à 50 % en poids d'acrylate de n-butyle ; et
(d) du 2-amino-2-méthyl-1-propanol qui est présent dans la composition en un rapport molaire de (a) sur (d) = 1:1,1 à 1:1,2, de préférence 1:1,1 ; et

(B) 20 % en poids à 80 % en poids, de préférence 40 % en poids à 70 % en poids, plus préférablement 60 % en poids à 70 % en poids, d'eau.

**15.** Dispersion de polymère selon la revendication 13 ou 14, dans laquelle le monomère contenant du phosphore (a) est le méthacrylate-phosphate de 2-hydroxyéthyle (HEMA-P) .

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022089879 A
- CN 109232785
- US 6710161 B2
- EP 2945991 B1


### Non-patent literature cited in the description


- Chemistry and Technology of Emulsion Polymerisation. Blackwell Publishing, 2005
- **J. O'DONNELL** ; **E.W. KALER**. *Macromolecular Rapid Communications*, 2007, vol. 28 (14), 1445-1454
- Acryl- und Methacrylverbindungen. **H. RAUCH-PUNTIGAM** ; **TH. VÖLKER**. acrylic and methacrylic compounds. Springer, 1967
- **KIRK-OTHMER**. Encyclopedia of Chemical Technology. J. Wiley, 1978, vol. 1, 386ff